# EUROPEAN PATENT APPLICATION

(11) **EP 1 388 569 A1**
(43) Date of publication of application: **11.02.2004**
(21) Application number: 02017538.6
(22) Date of filing: 06.08.2002
(51) Int. Cl.: C08L 23/04, C08L 3/00

(54) **Environment friendly material**

(71) Applicant: Lin, Bo-Hon, Changhu Hsien, Taiwan (TW)
(72) Inventor: Lin, Bo-Hon, Changhu Hsien, Taiwan (TW)
(74) Representative: Leson, Thomas Johannes Alois, Dipl.-Ing.

(57) **Abstract**

A material that is bio-degradable includes a mixture composed of 69.8% of Polyethylene, 30% of starch and 0.2% of foaming agent. The mixture is heated and foamed in a mold or is blown by a blowing molding machine to a desired shape. The material is bio-degradable.

## Description

### FIELD OF THE INVENTION

The present invention relates to an environment friendly material that is mixed with Polyethylene, starch and foaming agent. The material can be blown into bags or bowls and is bio-degradable

### BACKGROUND OF THE INVENTION

Conventional containers or bags are made of plastic which is light in weight and durable so that plastic is used in a variety of fields and brings us convenience in our daily life. However, the plastic generates toxic material when being burned so that it can only be buried in the soil. The plastic material can not be degradable in the soil and therefore increases the load of the environment. Paper-made bags are more friendly to the environment compared with the plastic, the paper-bags cannot contain liquid stuff and is easily to be torn apart. Besides, paper is made from trees which are important for balancing the weather of the earth so that the resource of trees is difficult to find.

The present invention intends to provide a new material that is made by bio-degradable elements and can be blown into different shapes of containers.

### SUMMARY OF THE INVENTION

In accordance with one aspect of the present invention, there is provided a material that is bio-degradable includes a mixture composed of 69.8% of Polyethylene, 30% of starch and 0.2% of foaming agent. The mixture is heated and foamed in a mold or is blown by a blowing molding machine to a desired shape. The material is bio-degradable.

The present invention will become more obvious from the following description when taken in connection with the accompanying drawings which show, for purposes of illustration only, a preferred embodiment in accordance with the present invention.

### BRIEF DESCRIPTION OF THE DRAWINGS

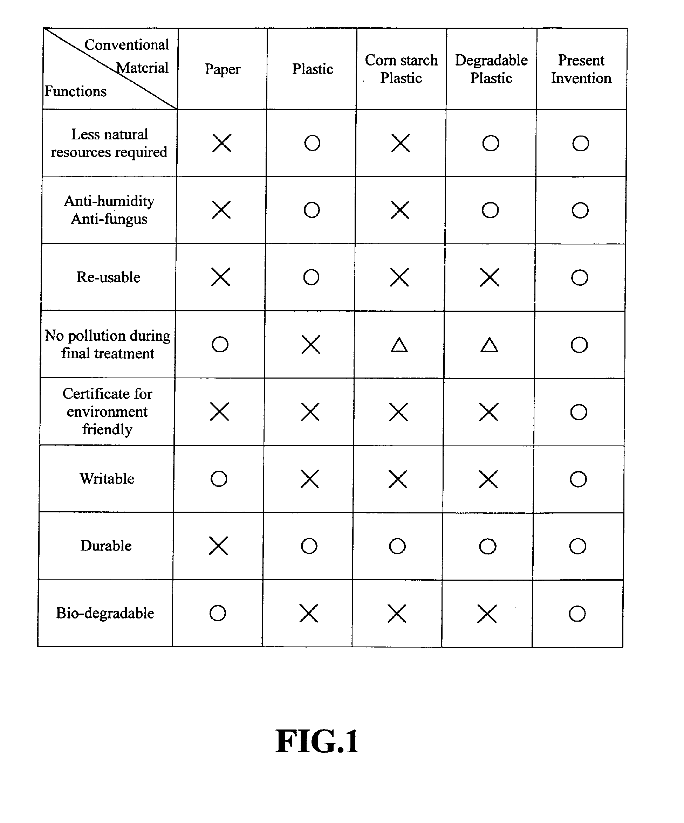

Fig. 1 shows a chart that compares the material of the present invention and conventional materials.

### DETAILED DESCRIPTION OF THE PREFERRED EMBODIMENT

The material of the present invention comprises a mixture composed of 69.8% to 40.8% of Polyethylene, 30% to 59% of starch and suitable amount of foaming agent. The mixture is heated and foamed in a mold to be product such as bowls, or even shoe soles. The material can also be blown in a blowing molding machine to be desired shapes. The mixture has a preferable proportion which includes 69.8% of Polyethylene, 30% of starch and 0.2% of foaming agent.

Referring to Fig. 1, the material has outstanding benefits when compared with conventional material, which includes less natural resources required, anti-humidity, anti-fungus, re-usable, no pollution during final treatment, certificate for environment friendly, writable, durable, and bio-degradable.

While we have shown and described the embodiment in accordance with the present invention, it should be clear to those skilled in the art that further embodiments may be made without departing from the scope of the present invention.

A material that is bio-degradable includes a mixture composed of 69.8% of Polyethylene, 30% of starch and 0.2% of foaming agent. The mixture is heated and foamed in a mold or is blown by a blowing molding machine to a desired shape. The material is bio-degradable.

## Claims

1. A material that is bio-degradable comprising:
a mixture composed of 69.8% to 40.8% of Polyethylene, 30% to 59% of starch and 0.2% of foaming agent, the mixture being heated and foamed.

2. A material that is bio-degradable comprising:
a mixture composed of 69.8% of Polyethylene, 30% of starch and 0.2% of foaming agent, the mixture being heated and foamed.
